**Europäisches Patentamt**

**European Patent Office**

**Office européen des brevets**

(19)

(11) Numéro de publication: **0 003 932**
**B1**

(12) **FASCICULE DE BREVET EUROPEEN**

(45) Date de publication du fascicule du brevet: 04.05.83

(21) Numéro de dépôt: 79400096.8

(22) Date de dépôt: 15.02.79

(51) Int. Cl.³: **C 09 D 3/64,** C 09 D 5/00, C 08 L 67/00

(54) Compositions de polyesters saturés réticulables pour peinture en poudre à surface mate et/ou satinée et procédé pour la préparation de cette peinture.

(30) Priorité: 20.02.78 FR 7804685

(43) Date de publication de la demande:
05.09.79 Bulletin 79/18

(45) Mention de la délivrance du brevet:
04.05.83 Bulletin 83/18

(84) Etats contractants désignés:
BE CH DE GB IT LU NL SE

(56) Documents cités:
FR - A - 2 295 990

WORLD SURFACE COATING ABSTRACTS, vol.
XLVIII no. 391 (1975) no. 75/0321

PATENTS ABSTRACTS OF JAPAN
UNEXAMINED APPLICATIONS, September 19,
C Section, Vol. 1, Number 106, page 2477

(73) Titulaire: CHLOE CHIMIE
Tour Générale 5, place de la Pyramide Quartier
Villon
F-92800 Puteaux (FR)

(72) Inventeur: Bernelin, Daniel
12, résidence de la Theuillerie
F-91130 Ris Orangis (FR)
Inventeur: Meyer, Jacques
141ter, rue de Saussure
F-75017 Paris (FR)

(74) Mandataire: Rochet, Michel et al,
CHLOE CHIMIE Service Brevets Tour Générale
Cedex 22
F-92088 Paris la Défense (FR)

Courier Press, Leamington Spa, England.

# 0 003 932

## Compositions de polyesters satures reticulables pour peinture en poudre a surface mate et/ou satinee et procede pour la preparation de cette peinture

L'invention concerne des compositions de polyesters saturés réticulables et un procédé pour leur préparation et elle se rapporte plus particulièrement à des compositions utilisables comme liants pour peintures en poudre donnant un feuil de peinture à surface mate et/ou satinée.

On connaît dans l'industrie des peintures l'utilisation de compositions saturées se présentant sous la forme pulvérulente dont le liant est constitué d'une résine réactive associée à un réticulant et qui contiennent en plus des adjuvants bien connus tels que des charges, des pigments, etc. Les compositions obtenues après fusion et réticulation fournissent en général des revêtements lisses et brillants présentant des propriétés mécaniques et chimiques élevées. Or, de plus en plus, l'industrie de la peinture demande des compositions susceptibles de fournir après cuisson une surface non brillante, mate et/ou satinée. Un procédé connu pour aboutir à ce résultat consiste en général à introduire dans la composition, en plus des charges pigmentaires, au moins une charge minérale de répartition granulométrique choisie en fonction de l'effet recherché. A bien égards, ce procédé présente des inconvénients majeurs et notamment: un taux de charge élevé nuisible au bon étalement du liant et pouvant à la limite provoquer un manque de cohésion du feuil de peinture, des propriétés mécaniques faibles, des défauts d'adhérence marqués, une résistance médiocre aux solvants et au vieillissement. Par ailleurs, le brevet de la RFA n° 2.351.176 décrit une composition de revêtement par poudre à base d'une résine de polyester saturé thermoplastique contenant des particules d'esters de cellulose, destinée à fournir par fusion un revêtement à surface mate et texturée; mais cette composition n'est pas réticulée, elle exige une température de cuisson élevée et la teneur en esters de cellulose est très é levée ce qui rend le revêtement obtenu sensible aux solvants habituels. L'industrie recherche donc des compositions utilisables comme liants de peinture en poudre fournissant un revêtement réticulé à surface non brillante et ne présentant pas les défauts et insuffisances des compositions connues.

Le but de l'invention est de fournir des compositions en poudre réticulables à des températures ne dépassant pas 220°C permettant d'obtenir des revêtements réticulés qui présentant une surface non brillante, une excellente tenue aux solvants, aux agents atmosphériques et aux rayons ultraviolets, et une bonne résistance au pliage, au choc et à l'emboutissage.

Ces compositions sont caractérisées en ce qu'elles comprennent:

a) une première résine de polyester saturé présentant un indice d'hydroxyle compris entre 175 et 185

b) une seconde résine de polyester saturée présentant un indice d'hydroxyle compris entre 40 et 60 et

c) un réticulant à fonction anhydride d'acide et/ou acide, ledit réticulant étant utilisé en quantité telle que le rapport —COOH total du réticulant/—OH total des résines polyester soit supérieur à 1.

Les polyesters constitutifs des compositions sont des produits connus et sont préparés selon des procédé connus par réaction d'un acide aromatique dicarboxylique ou d'un de ses esters d'alcoyle inférieur avec un diol dans des proportions choisies selon les indices d'acide et d'hydroxyle souhaités pour la résine. Comme acide dicarboxylique aromatique, on peut utiliser plus particulièrement l'acide téréphtalique, isophtalique, seuls ou en mélange ou conjointement avec des acides aliphatiques dicarboxyliques saturés comme l'acide adipique ou sébacique. En plus on peut associer aux acides dicarboxyliques des polyacides saturés d'une fonctionnalité supérieure à deux afin de ramifier partiellement le polyester sans qu'il devienne non fusible. Comme exemple d'acide à fonctionnalité supérieure à deux, on peut utiliser l'acide ou l'anhydride trimellitique, pyromellitique, butane tétracarboxylique. Parmi les diols que l'on peut utiliser pour obtenir le polyester, on peut citer à titre d'exemple l'éthylène glycol, le propylène glycol, des diols à pont éther tels que le diéthylène glycol et le dipropylène glycol; les butane diols, le dihydroxydiéthyléther du bisphénol A, le bisphénol A hydrogéné, le néopentylglycol, ces diols étant utilisés seuls ou en mélange. En plus on peut associer aux diols précédents des polyols de fonctionnalité supérieure à deux tels que le glycérol, le triméthylolpropane, le trihydroxyéthylisocyanurate, le pentaérythritol. Il est bien évident que la proportion de polyacide ou de polyol de fonctionnalité supérieure à deux doit être telle qu'elle n'aboutisse pas à une réticulation avancée et par conséquent à une infusibilité du polyester lors de sa préparation. La proportion maximale de monomère à fonctionnalité supérieure à deux est définie par la loi de Flory en fonction de l'avancement de la réaction (voir à ce sujet T. Alfrey, Mechanical Behaviour of high polymers — Interscience Publishers — vol. VI, page 268).

D'une manière générale, les polyesters saturés utilisés dans les compositions de l'invention sont des masses solides dont le point de ramollissement mesuré selon la méthode bille et anneau est compris entre 50°C et 130°C, de préférence entre 70°C et 100°C.

Comme réticulant à fonction anhydride d'acide et/ou acide, on utilise habituellement le produit de réaction d'un composé contenant au moins une fonction anhydride d'acide et au moins une fonction carboxylique ou bien au moins trois fonctions carboxyliques dont deux au moins sont susceptibles de former un anhydride d'acide tels que par exemple l'acide tricarballylique, l'anhydride trimellitique, le dianhydride pyromellitique, l'acide butane tétracarboxylique avec un diol aliphatique contenant de 2 à 10 atomes de carbone. Des exemples de tels réticulants sont décrits dans la demande de brevet

2

français n° 75.42685. Dans le cas de l'utilisation de l'anhydride trimellitique comme composé réactif pour la préparation du réticulant, le rapport molaire de l'anhydride trimellitique au diol aliphatique peut varier de 2/1 à 2/1,5. La réaction de l'anhydride trimellitique est effectuée à une température comprise entre 180°C et 250°C jusqu'à la fin du dégagement d'eau. Le produit de réaction est constitué d'un mélange de dianhydride à fonctions ester et de produits à fonctions acide. Le point de ramollissement du produit de réaction est compris entre 70°C et 130°C, de préférence entre 80°C et 110°C.

Bien entendu selon le rapport molaire des constituants du réticulant, la réactivité de celui-ci vis-à-vis d'une même résine varie.

Selon l'invention, le rapport pondéral de la première résine polyester à la seconde résine peut varier dans des limites importantes selon l'aspect de surface recherché sur la peinture réticulée obtenue. Toutefois, en général, le rapport est compris entre 0,5 et 2. Le rapport pondéral du réticulant à l'ensemble des deux résines présentes dans les compositions de l'invention est tel que le raport —COOH total du réticulant/—OH total des résines polyester soit supérieur à 1. L'expression —COOH total exprime la somme des fonctions —COOH existant dans le réticulant et des fonctions engendrées à partir des fonctions anhydride.

On fait en général utilisation d'un excès de réticulant par rapport à la quantité stoechiométrique pouvant aller jusqu'à un rapport —COOH total/OH de préférence compris entre 1,2 et 1,6.

Les compositions de l'invention sont réticulables à des températures comprises entre 160°C et 220°C pendant des temps variant entre 5 et 40 minutes.

Les formulations pour peintures en poudre contenant les compositions de l'invention contiennent habituellement des adjuvants classiques bien connus dans l'industrie des peintures tels que des charges, des pigments, des colorants. On peut également y incorporer des agents d'étalement tels que des polymères acryliques et des huiles de silicones.

Les compositions pour peintures peuvent être préparées en général selon trois variantes alternatives. Dans la première variante, on prépare séparément deux mélanges comprenant l'un la première résine, le réticulant et les adjuvants pour peintures et l'autre la deuxième résine, le réticulant et les adjuvants pour peinture. Chaque mélange est malaxé par fusion dans un malaxeur conventionnel tel qu'un mélangeur Banburry ou Büss à une température n'excédant pas en général 120°C. Puis chaque mélange est refroidi, broyé finement en particules de 20 à 100 microns, puis tamisé. On mélange ensuite à sec des quantités choisies de deux poudres á l'aide d'un mélangeur culotte pour obtenir une composition prête à l'emploi. Dans la deuxième variante, les deux poudres de résines prises en proportion choisies sont homogénéisées à sec puis sont ensuite conditionnées. Lors de la préparation de la peinture, on ajoute à sec aux résines le réticulant et les adjuvants; on procède ensuite à un mélange par fusion comme il vient d'être décrit puis on broie et tamise. Dans la troisième variante, la plus économique, les constituants du liant se présentent sous forme de poudres grossières et les adjuvants et charges sont intimement mélangés par fusion du liant dans un malaxeur conventionnel tel qu'un mélangeur Banburry ou Büss à une température n'excédant pas en général 120°C. Puis le mélange est refroidi et broyé finement en particules de l'ordre de 20 à 100 microns puis tamisé. On applique les mélanges ainsi obtenus selon des procédés connus tels que le lit fluide, la pulvérisation électrostatique sur des matériaux thermiquement résistants préalablement dégraissés tels que des pièces métalliques ou céramiques puis on procède à la réticulation à des températures de 160°C à 220°C pendant 5 à 40 minutes. L'épaisseur moyenne du revêtement obtenu sur le support est généralement comprise entre 30 et 70 microns.

Les compositions de l'invention permettent d'obtenir des revêtements réticulés présentant une surface non brillante. La brillance du revêtement se mesure par réflexion d'une lumière incidente. Elle est exprimée par le rapport en pourcent de l'intensité de la lumière réfléche, dans la direction normale de réflexion, à l'intensité de la lumière incidente sous un angle de 60° à l'aide de l'appareil de réflexion de Gardner Laboratories, une brillance de 0% étant celle d'un corps noir et une brillance de 94% étant celle de l'opaline. Les compositions de l'invention aboutissent à des revêtements à surface dont la brillance ainsi définie est comprise entre 10% et 60%, plus particulièrement entre 25% et 45%. La surface de revêtement obtenue présente une morphologie différente de ce que l'on appelle couramment dans la technique le phénomène de "peau d'orange" et qui est dû à une mauvaise tension du feuil. Par comparaison, les revêtements de l'art antérieur contenant comme liant une système résine-réticulant simple mais ne contenant pas le double système tel que spécifié ci-dessus, présentent, toutes choses étant égales par ailleurs, une brillance comprise entre 75% et 95% en teinte blanche, cette brillance pouvant descendre à 65% dans le cas de peau d'orange et de mauvaise tension du feuil de peinture, l'aspect de surface étant frisé.

Afin de mieux illustrer l'invention, on donne ci-après des exemples dans lesquels les parties sont exprimées en poids sauf indications contraires.

## Exemple 1

A — Dans le tableau 1, on donne les compositions molaires des différentes résines utilisées, leurs indices d'acide et d'hydroxyle et leurs points de fusion.

Les résines sont préparées d'une manière connue par réaction des composants à 200°C sous atmosphère d'azote jusqu'à obtention des indices recherchés. Puis les résines sont coulées en continu

3

sur une bande métallique refroidie en épaisseur de 4 mm et sont grossièrement broyées.

B — Préparation de réticulant à fonction anhydride.

On prépare un réticulant à partir des composés réunis dans le tableau 2.

On introduit au préalable dans un réacteur balayé à l'azote 384 g d'anhydride trimellitique que l'on porte à 230°C, puis on y introduit progressivement 77,5 g d'éthylène glycol tout en maintenant la température dans le réacteur par refroidissement externe. Deux heures après la fin de l'addition, il n'y a plus de dégagement d'eau. On coule, refroidit et broie les produits.

Les indices d'acide obtenus sont dans le tableau 3.

C — Préparation des peintures en poudre.

On réalise les compositions pour peintures en poudres suivantes à partir des composés indiqués dans le tableau 4.

On réalise un mélange intime des composants pulvérulants puis on extrude le mélange sur un mélangeur Büss à une température de 100°C. Le mélange est refroidi puis broyé finement puis tamisé à l'aide d'un tamis d'ouverture de maille 100 microns.

La poudre résultante est appliquée à l'aide d'un pistolet électrostatique (marque SAMES) sur une plaque d'acier (dégraissée au préalable) de dimensions 20 cm x 10 x 0,08 cm. Cette plaque est ensuite étuvée à 200°C pendant 25 minutes.

Après refroidissement, on mesure les propriétés suivantes de feuil de peinture:

Résistance au choc: mesurée selon la norme NFT 30039

Emboutissage Erichsen: mesuré selon la norme NFT 30019

Pliage ASTM: mesuré selon la norme ASTM D 522—60

Dureté Persoz (secondes): mesurée selon la norme NFT 30016

Essai MEK: On dépose une goutte de méthyléthylcétone sur le revêtement, on frotte à cet endroit avec l'ongle et on note le temps nécessaire en minute pour enlever le revêtement.

Brillance: On mesure la brillance à l'aide de l'appareil Gardner Laboratories sous une incidence lumineuse de 60°. Elle est exprimée en intensité réfléchie par rapport à la lumière incidente (en pourcent) (norme ASTM D 523).

Les résultats sont réunis dans le tableau 5.

ESSAI COMPARATIF 1

Dans cet exemple, on utilise les compositions données dans le tableau suivant:

| | Compositions n° | |
|---|---|---|
| | 3 | 4 |
| Résine C | 100 parties | 0 partie |
| Résine D | 0 partie | 100 parties |
| Réticulant | 40 parties | 20 parties |
| $TiO_2$ rutile | 50 parties | 50 parties |
| Acronal 4F | 2 parties | 2 parties |
| ZnO | 1 partie | 1 partie |

On réalise des compositions pour peintures et on les met en oeuvre selon l'enseignement de l'exemple 1. La brillance fournie par les revêtements à partir des compositions précédentes est respectivement de 85% (composition 3) et de 80% (composition 4).

TABLEAU 1

Compositions et Caractéristiques des Résines de Polyester Utilisées

| Résines | Composants (en moles) | | | | | Caractéristiques des résines | | |
|---|---|---|---|---|---|---|---|---|
| | Acide téréphtalique | Propylène glycol | Néopentyl glycol | Triméthylol propane | Penta érythritol | Indice d'acide | Indice d'hydroxyle | Point de fusion (°C) |
| C | 1 | 1,15 | | | 0,15 | 5 | 180 | 85 |
| D | 1 | | 1 | 0,07 | | 5 | 50 | 101 |

**0 003 932**

TABLEAU 2

Composition du Réticulant Anhydré

| Anhydride trimellitique | 2 moles |
|---|---|
| Ethylène glycol | 1,25 mole |

TABLEAU 3

Caractéristiques du Réticulant Anhydride

| $I_A$ en milieu aqueux | 463 |
|---|---|
| $I_A$ en milieu alcoolique | 284 |
| Point de fusion (bille et anneau) | 100°C |

TABLEAU 4

Compositions Pondérales pour Peintures

| Composants | Composition n° | |
|---|---|---|
| | 1 | 2 |
| Résine C | 50 parties | 50 parties |
| Résine D | 50 parties | 50 parties |
| Réticulant | 31 parties | 40 parties |
| $TiO_2$ rutile* | 50 parties | 50 parties |
| Agent d'étalement** | 2 parties | 2 parties |
| ZnO | 1 partie | 1 partie |

\* Oxyde de titane rutile — Kronos CL 200, vendu par la Société Industrielle du Titane.

\*\* Acronal 4F, vendu par la Société BASF.

### TABLEAU 5

Propriétés des Peintures

| Mesure Composition | Epaisseur en $\mu$m | Emboutissage Erichsen | Résistance au choc kg/cm | Pliage ASTM | | Dureté Persoz sec | Essai MEK | Brillance % |
|---|---|---|---|---|---|---|---|---|
| | | | | Elongation % | $\phi$ mm | | | |
| 1 | 50 | 9 | 100 | 32 | 3 | 280 | 3 | 40 |
| 2 | 50 | 9 | 100 | 32 | 3 | 280 | 3 | 30 |

## 0 003 932

### Revendications

1. Composition pour liant de peintures en poudre donnant un revêtement à surface non brillante, caractérisée en ce qu'elle comprend a) une première résine de polyester saturé présentant un indice d'hydroxyle compris entre 175 et 185, b) une seconde résine de polyester saturé présentant un indice d'hydroxyle compris entre 40 et 60 et c) un réticulant à fonctions anhydride d'acide et/ou acide, ledit réticulant étant utilisé en quantité telle que le rapport —COOH total du réticulant/—OH total des résines polyester soit supérieur à 1.

2. Composition selon la revendication 1, caractérisé en ce que les résines polyester sont les produits de réaction d'au moins un acide dicarboxylique aromatique avec un ou plusieurs diols et présentent un point de fusion compris entre 50°C et 130°C.

3. Composition selon la revendication 2, caractérisée en ce que l'acide dicarboxylique aromatique est associé à un ou plusieurs acides aliphatiques saturés ou un ou plusieurs acides aromatiques de fonctionnalité supérieure à 2 et/ou en ce que le diol est associé à un ou plusieurs polyols de fonctionnalité supérieure à 2.

4. Composition selon la revendication 1, caractérisée en ce que le réticulant à fonctions anhydride d'acide et acide est le produit de réaction de l'anhydride trimellitique avec un diol contenant de 2 à 8 atomes de carbone, le rapport molaire de l'anhydride trimellitique au diol étant compris entre 2/1 et 2/1,5 et dont le point de fusion est compris entre 80°C et 130°C.

5. Composition selon l'une quelconque des revendications 1 et 4, caractérisée en ce que le réticulant est le produit de réaction de l'anhydride trimellitique et de l'éthylène glycol et en ce qu'il présente un indice d'acide en milieu aqueux de 463 et un indice d'acide en milieu alcoolique de 284, le rapport molaire anhydride trimellitique/éthylène glycol étant de 2/1,25.

6. Composition selon l'une quelconque des revendications 1 à 5, caractérisé en ce que le rapport pondéral des deux résines est compris entre 0,5 et 2.

7. Composition selon l'une quelconque des revendications 1 à 6, caractérisée en ce que le rapport pondéral du réticulant aux résines saturées réticulables est tel que le rapport —COOH total/OH soit compris entre 1,2 et 1,6.

8. Procédé de préparation d'une peinture en poudre dont le liant est une composition selon l'une quelconque des revendications précédentes, caractérisé en ce que l'on mélange par fusion les résines et le réticulant conjointement avec les adjuvants pour peinture, à une température inférieure à 120°C, de préférence inférieure à 100°C, puis en ce que l'on refroidit, broye et tamise le mélange obtenu.

9. Procédé d'obtention d'une revêtement réticulé à surface non brillante, caractérisé en ce que l'on réticule entre 160°C et 220°C pendant des temps compris entre 5 et 40 minutes une peinture en poudre dont le liant est constitué par une composition selon l'une quelconque des revendications 1 à 7.

### Patentansprüche

1. Pulverförmige Farbbindemittelmischung, die Überzüge mit nicht glänzender Oberfläche ergibt, dadurch gekennzeichnet, daß sie

a) ein erstes gesättigtes Polyesterharz mit einer Hydroxylzahl zwischen 175 und 185,

b) ein zweites gesättigtes Polyesterharz mit einer Hydroxylzahl zwischen 40 und 60 und

c) einen Vernetzer mit Säure- und/oder Säureanhydridfunktionen enthält, der in einer solchen Menge eingesetzt wird, daß das Verhältnis des Gesamt —COOH des Vernetzers zum Gesamt —OH der Polyesterharze größer 1 ist.

2. Mischung nach Anspruch 1, dadurch gekennzeichnet, daß die Polyesterharze die Umsetzungsprodukte wenigstens einer aromatischen Dicarbonsäure mit einem oder mehreren Diolen sind und einen Schmelzpunkt zwischen 50°C und 130°C besitzen.

3. Mischung nach Anspruch 2, dadurch gekennzeichnet, daß die aromatische Dicarbonsäure mit einer oder mehreren gesättigten aliphatischen Säuren oder einer oder mehrerer aromatischen Säuren mit einer Wertigkeit über 2 vereinigt ist und/oder daß das Diol mit einem oder mehreren Polyestern einer Wertigkeit über 2 eingesetzt wird.

4. Mischung nach Anspruch 1, dadurch gekennzeichnet, daß der Vernetzer mit Säure- oder Säureanhydridfunktion das Reaktionsprodukt von Trimellitsäureanhydrid mit einem Diol mit 2 bis 8 Kohlenstoffatomen ist, wobei das Molverhältnis des Trimellitsäureanhydrids zum Diol zwischen 2:1 und 2:1,5 und der Schmelzpunkt zwischen 80 und 130°C liegt.

5. Mischung nach irgendeinem der Patentansprüche 1 bis 4, dadurch gekennzeichnet, daß das Vernetzungsmittel das Reaktionsprodukt von Trimellitsäureanhydrid und Äthylenglykol ist und daß es eine Säurezahl in wässrigem Medium von 463 und in einem alkoholischen Medium von 284 besitzt und daß das Molverhältnis von Trimellitsäureanhydrid zu Äthylenglykol 2:1,25 ist.

6. Mischung nach irgendeinem der Ansprüche 1 bis 5, dadurch gekennzeichnet, daß das Gewichtsverhältnis der beiden Harze 0,5 bis 2 beträgt.

7. Mischung nach irgendeinem der Ansprüche 1 bis 6, dadurch gekennzeichnet, daß das

8

Gewichtsverhältnis des Vernetzers zu den gesättigten, vernetzbaren Harzen derart ist, daß das Verhältnis Gesamt —COOH: OH zwischen 1,2 und 1,6 liegt.

8. Verfahren zur Herstellung einer Pulverfarbe, deren Bindemittel eine Mischung nach irgendeinem der vorangegangenen Ansprüche ist, dadurch gekennzeichnet, daß man die Harze und den Vernetzer gemeinsam mit den Farbzusätzen durch Schmelzen bei einer Temperatur unter 120°C, vorzugsweise unter 100°C, vermischt und das erhaltene Gemisch abkühlt, mahlt und absiebt.

9. Verfahren zur Herstellung eines vernetzten Überzugs mit nicht glänzender Oberfläche, dadurch gekennzeichnet, daß man eine·Pulverfarbe, deren Bindemittel aus einer Mischung nach irgendeinem der Ansprüche 1 bis 7 besteht, für die Dauer von 5 bis 40 min zwischen 160 und 200°C vernetzt.

**Claims**

1. A composition for a binding agent for paints in powder form giving a coating having a non-shiny surface, characterised in that it comprises: a) a first saturated polyester resin having a hydroxyl number of from 175 to 185, b) a second saturated polyester resin having a hydroxyl number of from 40 to 60, and c) a cross-linking agent having acid anhydride and/or acid functions, said cross-linking agent being used in an amount such that the ratio total —COOH of the cross-linking agent/total —OH of the polyester resins is higher than 1.

2. A composition according to claim 1 characterised in that the polyester resins are the products of reaction of at least one aromatic dicarboxylic acid with one or more diols and have a melting point of from 50°C to 130°C.

3. A composition according to claim 2 characterised in that the aromatic dicarboxylic acid is associated with one or more saturated aliphatic acids or one or more aromatic acids with a functionality of higher than 2 and/or that the diol is associated with one or more polyhydric alcohols with a functionality of higher than 2.

4. A composition according to claim 1 characterised in that the cross-linking agent having acid and acid anhydride functions is the product of reaction of trimellitic anhydride with a diol containing from 2 to 8 carbon atoms, the molar ratio of the trimellitic anhydride to the diol being from 2/1 to 2/1.5, the melting point thereof being from 80°C to 130°C.

5. A composition according to either one of claims 1 and 4 characterised in that the cross-linking agent is the product of reaction of trimellitic anhydride and ethylene glycol and that it has an acid value in an aqueous medium of 463 and an acid value in an alcohol medium of 284, the molar ratio of trimellitic anhydride to ethylene glycol being 2/1.25.

6. A composition according to any one of claims 1 to 5 characterised in that the weight ratio of the two resins is from 0.5 to 2.

7. A composition according to any one of claims 1 to 6 characterised in that the weight ratio of the cross-linking agent to the cross-linkable saturated resins is such that the ratio total —COOH/OH is from 1.2 to 1.6.

8. A process for the preparation of a paint in powder form, in which the binding agent is a composition according to any one of the preceding claims, characterised in that the resins and the cross-linking agent are mixed by melting jointly with the paint additives, at a temperature of less than 120°C, preferably less than 100°C, and then the resulting mixture is cooled, crushed and sieved.

9. A process for producing a cross-linked coating with a non-shiny surface, characterised by cross-linking at a temperature of from 160°C to 220°C, for a period of time of from 5 to 40 minutes, a paint in powder form, the binding agent of which is formed by a composition according to any one of claims 1 to 7.